# EUROPEAN PATENT APPLICATION

(11) **EP 0 963 798 A1**
(43) Date of publication of application: **15.12.1999**
(21) Application number: 98303995.9
(22) Date of filing: 20.05.1998
(51) Int. Cl.: B21D 7/06, B21D 9/03, B21D 7/022, F16L 1/235

(54) **Pipe-bending machine suitable for operating on the seabed**

(71) Applicant: Saipem S.p.A., 20097 San Donato Milanese (Milano) (IT)
(72) Inventor: Oliveri, Vincenzo c/o Saipem S.p.A., 20097 S. Donato Milanese, Milan (IT)
(74) Representative: Blanco White, Henry Nicholas

(57) **Abstract**

A pipe-bending machine suitable for use on continuous pipelines 4, especially underwater, comprises first and second means 6, 17 for engaging one side of a pipeline 4 at locations separated along the length of the pipeline, and third means 12 for engaging the other side of such a pipeline between the first and second means. means 7 is provided to urge at least one of the first, second, and third means towards the pipeline so that the first, second, and third means co-operate to apply a bending stress to the pipeline. The machine is characterised by a portion 9, 12 that is arranged to be closed round a pipeline 4 and opened to permit the machine to be positioned round and removed from the pipeline. A mandrel suitable for use within such a pipeline 4 under construction comprises an axial core 301, a plurality of bowed staves 308 extending along the core, means 309, for decreasing and increasing the axial length between the ends of the staves, thereby causing them to bow out to a greater and lesser extent and to grip and release the pipeline, and a plurality of annular segments 310 disposed around the core within the staves and provided with means 311 for causing them to expand and clamping them firmly against the inside of the pipeline 4.

## Description

The invention relates to pipelines, and especially to the laying of pipelines underwater.

It is well known to lay a pipeline under water by assembling lengths of pipe into a continuous pipeline on board a floating vessel, lowering the pipeline into the water, and gradually moving the vessel forward, laying the pipeline as it goes. The pipeline is usually simply laid onto the bottom of the water, adapting itself to the contours of the bottom. However, the pipelines used for offshore oil and gas production tend to be of large diameter. Such a large pipeline is not very flexible, and it has been found that the contours of the seabed are often too irregular for the pipeline to adapt itself to perfectly. In particular, if there is an abrupt downward angle in the seabed, then the pipeline will tend to cantilever itself out from the lip of the angle, only gradually drooping to settle onto the new line of the seabed after a considerable unsupported free span. That is undesirable, firstly because the weight of the free span causes significant stress at the point where the it leaves contact with the seabed, and secondly because the free span is subject to much greater forces from currents and the like, and is at much greater risk of accidental damage, than a pipeline lying on the seabed.

In order to reduce that problem, it has been proposed to prepare a path along the seabed that has no sudden angles in its gradient. However, that requires extensive underwater civil engineering works, which are difficult, expensive, and slow, and may be undesirable from an environmental point of view.

When laying pipelines on land, it is known to bend the individual pipe joints to shape before welding them together to form the pipeline. There is commercially available a machine, on which the preamble of claim 1 is based, comprising a relatively long, straight cradle or "stiffback", on which the incoming pipe is laid, a pin-up shoe, on which the front end of the pipe joint rests, and a parabolically curved die that is positioned above the inner end of the stiffback. In use, the pipe joint is positioned on the stiffback and pin-up shoe. The pin-up shoe is raised with a wedge, and the inner end of the stiffback is raised with a hydraulic cylinder, to clamp the pipe joint against the underside of the die. Then, the outer end of the stiffback is raised, bending the pipe joint round the die. The stiffback and pin-up shoe are then lowered, the pipe joint is advanced through the machine by means of a winch, and the bending operation is repeated. By making slight but closely-spaced bends in the pipe joint, it is thus possible to produce a pipe joint with an almost smooth curve over most of its length. If an internal mandrel is required to prevent buckling of the pipe, that can easily be inserted and positioned through one end of the pipe joint, and can be expanded and retracted by hydraulic power from the bending machine's power supply.

However, that machine is not suitable for bending a pipeline that has already been assembled, because it requires the pipe to be fed in at one end and out at the other, and because it requires the pipe to be advanced through the machine as it is bent. It has been proposed to bend the pipe joints for an underwater pipe on board the pipe-laying vessel before assembly, but it has been found that laying a pipeline with bends in it causes excessive stress in the pipeline. Also, in deep water, it is not always easy to calculate the required shape of the pipeline, and the exact positioning of the curves, far enough in advance. WO-A 93/22592 proposes laying such a pipeline including pre-curved elements, by using an auxiliary vessel to support the curved portions in the water during laying.

EP-A 0 006 812 proposes assembling a pipeline inside a vehicle travelling on the seabed. Pre-curved sections may be used or, if the pipe is cast-in-situ concrete, it may be produced in a curved form.

The invention provides a pipe-bending machine suitable for use on continuous pipelines, comprising: first and second means for engaging one side of a pipeline at locations separated along the length of the pipeline; third means for engaging the other side of the pipeline between the first and second means; and means for urging at least one of the first, second, and third means towards the pipeline so that the first, second, and third means cooperate to apply a bending stress to the pipeline; characterised in that the pipe-bending machine comprises a portion that is arranged to be closed round a pipeline and opened to permit the machine to be positioned round and removed from a pipeline.

The first, second, and third means advantageously have a concave transverse profile matched to the curvature of a pipeline that the machine is intended to bend, and the third means advantageously has a convex, preferably parabolic, longitudinal profile. Especially when, as is also preferred, the first, second, and third means are of substantial extent lengthways of the pipe, that enables to forces applied to the pipe to be spread over a large area, reducing the pressure applied and the risk of damage to the surface of the pipe. That is desirable because the sort of underwater pipeline on which the bending machine according to the invention is primarily intended to be used typically has only a relatively thin, soft, bituminous or plastics anti-corrosion coating, and because it is not easy to inspect or repair the coating after bending.

The third means is preferably constructed in two halves, each mounted on a pivotable arm, and means such as one or more bolts, preferably hydraulically actuated, arranged to pass through aligned bores in overlapping tip portions of the arms, should then be provided to lock the arms together when they are closed round a pipe. That arrangement has the advantage that the third means is then the only part of the machine that has to open and close in order to engage the pipeline, enabling an especially simple, robust, and reliable construction. That arrangement is also the most suitable for bending the pipeline downwards in order to accommodate upwardly-convex changes in the slope of the ground surface.

The bending machine may have wedge means arranged to urge the first means towards a pipeline with which the machine is engaged in order to bend the pipeline.

The machine may comprise legs arranged to engage a seabed or other ground surface on or close to which the pipeline is lying, in order to stabilise the machine when it is working, or to enable the pipeline to be lifted off the ground surface so that the bending machine can engage its underside.

The legs may have rollers, skids, or the like at their feet, arranged to permit the machine to move along the pipeline with the legs remaining in engagement with the ground surface. Instead, or in addition, the machine may comprise wheels, rollers, or the like, by means of which the machine can run along a pipe. Preferably, also, the machine is so arranged that it can be held in a position closed round, but not clamped onto, the pipeline. In order to impart a significant change of line to a pipeline without over-straining the material of the pipe, it is usually preferred to form a series of slight, closely spaced bends, and that process is greatly facilitated if the bending machine can be moved along the pipe without entirely disengaging it.

The invention also provides a mandrel for use within a pipeline under construction comprising an axial core, a plurality of bowed staves extending from one end of the core to the other, means for decreasing and increasing the axial length between the ends of the staves, thereby causing them to bow out to a greater and lesser extent and to grip and release the pipeline, and a plurality of annular segments disposed around the core within the staves and provided with means for causing them to expand and clamping them firmly against the inside of the pipeline.

At least one end of the staves is preferably connected to the core by means, preferably one or more hydraulic cylinders, for urging the end of the staves lengthways of the core.

The means for causing the annular segments to expand advantageously comprises wedges acting circumferentially. Instead, it may comprise hydraulic jacks acting radially.

The mandrel preferably comprises a beacon emitting gamma rays, sound waves, a magnetic field, or other emanation that can be detected and located through the wall of a pipeline.

Various forms of apparatus in accordance with the invention, and their methods of operation, will now be described by way of example only with reference to the accompanying drawings, in which:
Fig. 1 is a side elevation view of a first form of bending machine with the die closed round a pipeline but not clamped in place;
Fig. 2 is a view similar to Fig. 1, with the machine clamped in place for bending;
Fig. 3 is a cross-sectional view through the machine of Fig. 1 with the die open;
Fig. 4 is a section along the line A-A in Fig. 3;
Fig. 5 is a sectional view similar to Fig. 3 with the die closed, along the line B-B in Fig. 1;
Fig. 6 is an end elevation view of a second form of bending machine, with the die open and legs retracted;
Fig. 7 is a view similar to Fig. 6, with the die closed and legs lowered;
Fig. 8 is a view similar to Fig. 6, showing a device for gripping and lifting a pipeline; and
Fig. 9 is a longitudinal sectional view through a pipeline with a mandrel inside it.

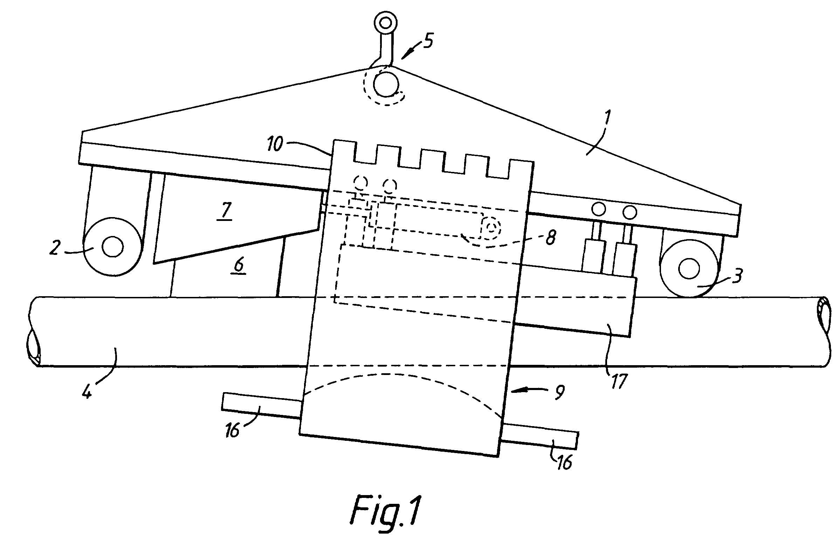

Referring to the drawings, and initially to Figs. 1 to 5, a first form of sea-bed pipe-bending machine according to the invention comprises a generally U-shaped chassis 1 provided with front wheels 2 and rear wheels 3 designed to run along a pipeline 4. The chassis may be provided with conventional lifting means, indicated generally by the reference number 5, by which it may be lowered from, and lifted back to, a vessel floating on the surface, such as a pipe-laying vessel (not shown) or an auxiliary vessel (not shown) attending such a pipe-laying vessel. Preferably, the lifting means 5 attach the pipe-bending machine to a remotely-operated vehicle (ROV) or to an apparatus (not shown) carrying ballast and/or buoyancy, stabilising legs, and other ancillary equipment, which apparatus is in turn tethered to a surface vessel. If the pipe-bending machine does not have its own power and propulsion systems, it may be powered and manoeuvred by a small ROV attached to docking points (not shown) between the sides of the chassis 1. Although the force that must be exerted by the bending machine to bend a large-diameter pipe is considerable, the power required is not great, because it is advantageous to increase the force very slowly.

Immediately behind the front wheels 2, the machine has a bending shoe 6, which has a concave cylindrical surface with an internal diameter equal to the external diameter of the pipe 4 to be bent. If the diameter of the actual pipe 4 is less than the maximum diameter for which the machine is designed, the internal diameter of the shoe 6 is reduced by a sleeve (not shown). The bending shoe 6 is separated from the chassis 1 of the machine by a wedge 7, which is arranged to be moved by a hydraulic cylinder 8. If the cylinder 8 is retracted, it draws the wedge 8 towards it, forcing the shoe 6 away from the chassis 1. If the cylinder 8 is extended, it pushes the wedge 7 away, raising the shoe 6, which is held captive by a prismatic profile, towards the chassis 1.

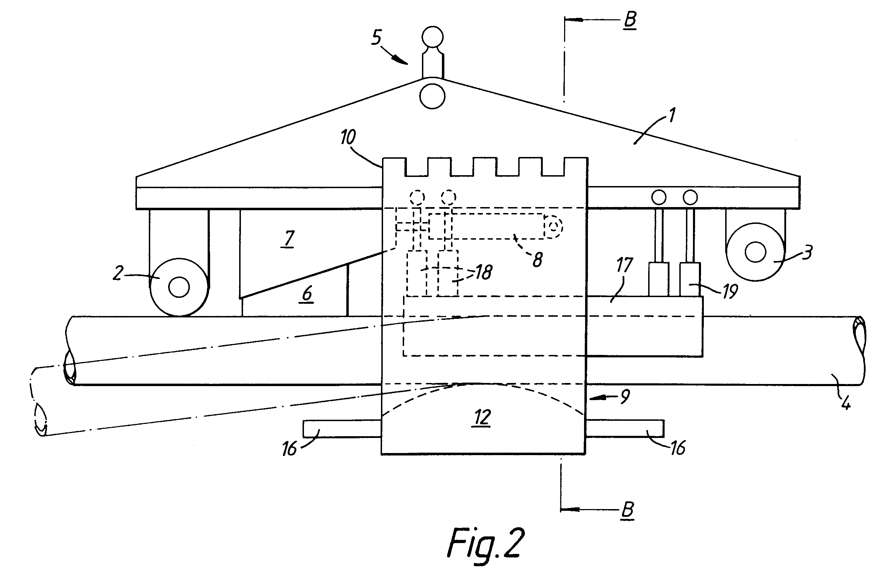

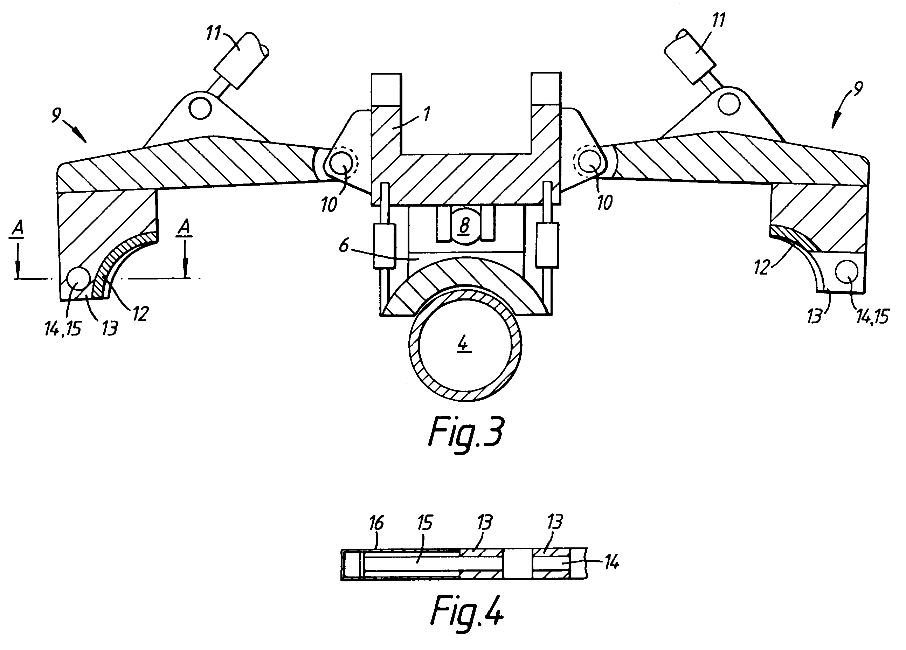

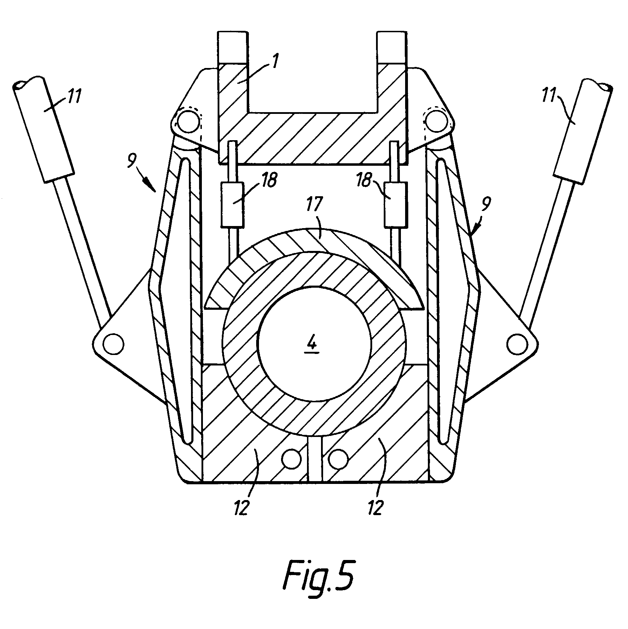

Behind the shoe 6 are a pair of arms 9, attached to the chassis 1 by stout hinges 10. The arms are arranged to be raised and lowered by hydraulic cylinders 11, which have been omitted from Figs. 1 and 2 in the interests of clarity. [What are the top ends of the cylinders 11 attached to? Figs. 3 and 5 are conspicuously different.] At its distal end, each of the arms 9 carries one half of a movable bending restraint 12, which is arranged to close under the pipeline 4. The arms are also provided with fingers 13 that interleave when the movable bending restraint 12 is closed. The fingers 13 are provided with longitudinal bores 14 that, when the bending restraint 12 is fully closed, are aligned, and receive pin-rods 15 that are driven in and out by hydraulic cylinders 16 (see especially Fig. 4).

The movable bending restraint 12 is a concave circular arc in transverse section, of a diameter to fit snugly under the pipeline 4. In longitudinal cross-section, it is convex, and curved as the central portion of a parabola, with a central radius of several times the diameter of the pipe. The bending restraint 12, or at least the inner surface of it, is preferably in the form of a removable lining, so that a differently-shaped bending restraint can be substituted for bending a pipe of different diameter.

Behind, and partly overlapping, the arms 9, and in front of the rear wheels 3, is a saddle clamp 17, The saddle clamp 17, like the shoe 6, has a concave cylindrical shape that fits the pipe, and is if necessary sleeved down to do so. The clamp 17 may be raised and lowered at each end independently by hydraulic cylinders 18 and 19. Because the shoe 6 and the saddle clamp 17 have a considerable axial length, and because their internal diameters are set to match the particular pipe 4, they engage the pipe over a considerable area. Thus, the pressure that they apply is relatively low, and there is little risk of damage to the coating on the surface of the pipe 4, which may be of a bituminous or plastics material and relatively soft.

In operation, the machine, with the arms 9 open and the clamp 17 retracted, as shown in Fig. 3, is lowered onto a pipeline 4 until it is supported by the wheels 2 and 3. The machine is similar in size, weight, and buoyancy to existing seabed trenching machines, so that an operator experienced in handling such trenching machines can manoeuvre the bending machine without difficulty. The machine is preferably lowered onto a section of pipeline that requires a downward curve, to accommodate the pipeline to an abrupt downward angle in the seabed, and is preferably lowered onto that section of pipeline just before it comes to rest on the seabed, so that there is room under the pipeline 4 for the arms 9 to close freely. Then, the hydraulic cylinders 11 are extended, and the arms 9 are swung down until the bending restraint 12 closes. The pin-rods 15 are then extended, locking the bending restraint 12 closed. (See Fig. 1). The position of the machine on the pipe may be adjusted by rolling the machine on the wheels 2 and 3, either by means of motors driving the wheels, or by the thrusters of the ROV that controlled the lowering of the machine onto the pipeline.

When the machine is correctly located, the hydraulic cylinders 18 and 19 are extended, clamping the pipeline between the bending restraint 12 and the forward portion of the clamp 17, and the cylinder 8 is partially retracted, tightening the wedge 7 and clamping the pipeline 4 between the shoe 6, the bending restraint 12, and the rear portion of the clamp 17. (See Figs. 2 and 5.) Then, by further retracting the cylinder 8 and the wedge 7, the shoe 6 is forced downwards. The pipe 4 is thus bent between the clamp 17 and the shoe 6, over the bending restraint 12, the curved surface of which imparts the desired curvature to the pipe, as shown symbolically in chain lines in Fig. 2. The angle of bend imparted to the pipe 4 by the bending operation is small. Consequently, there is very little longitudinal movement of the pipe 4 over the shoe 6 or the saddle clamp 12, and correspondingly little risk of damage to the coating of the pipe.

The cylinders 8, 18, and 19 are then released, and the machine is advanced along the pipe 4 on the wheels 2 and 3 a short distance, which may be as little as a few cm. The machine is then clamped onto the pipe again, and the bending operation is repeated. The cycle of operations is then repeated as often as desired, to impart a desired degree of curvature to the length of pipeline. Finally, the pin-rods 15 are withdrawn, the arms 9 are spread apart, and the machine is lifted away from the pipeline. It is estimated that for a typical pipeline on a typical seabed the maximum free span can be considerably reduced with only a small number of bending operations, without excessively straining the pipe.

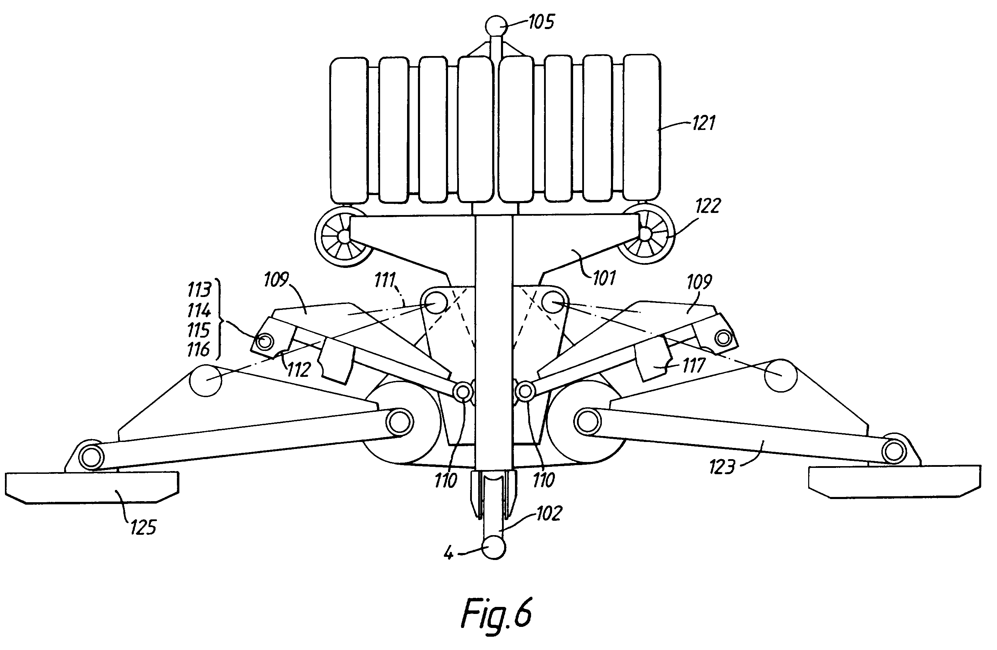

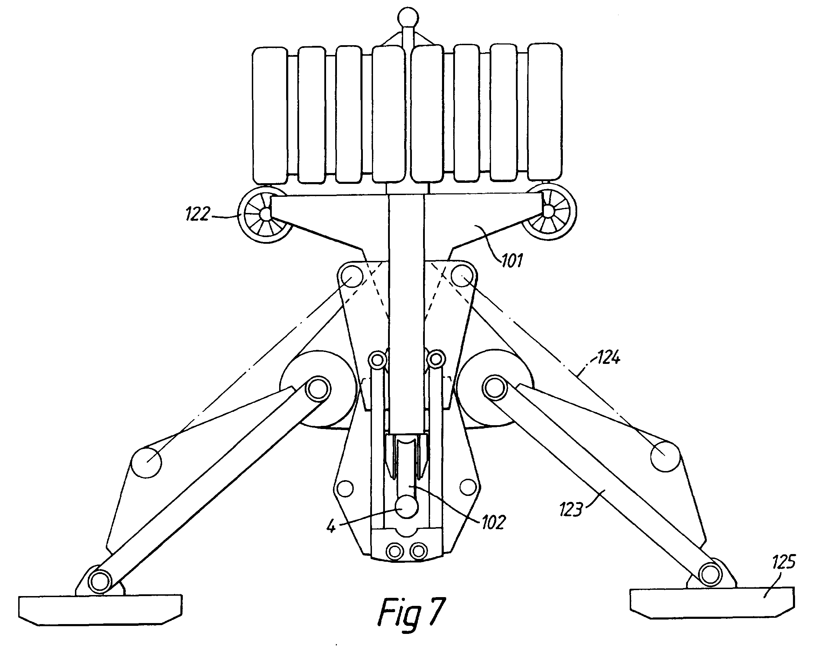

Referring now to Figs. 6 and 7, a second form of bending machine according to the invention is in the form of an ROV. In Figs. 6 and 7, parts corresponding to those of the first form of bending machine have been assigned the same reference numbers increased by 100 and, in the interests of conciseness, the description of them will not be repeated in detail. The machine comprises a chassis 101, equipped with wheels 102 town on a pipe 4. At the upper extremity of the machine is the lifting tackle 105, and immediately below that are a buoyancy tank 121, to ensure that the ROV remains upright in normal use, and thrusters 122 for manoeuvring of the ROV.

Arms 109 are attached to the chassis 101 by hinges 110, and carry at their outer ends the halves of the bending restraint 112 and the bolt systems 113 to 116 for locking the bending restraint closed in use. In addition, however, the fixed clamp 117 is in the form of two halves mounted on the arms 109 for sliding movement lengthways of the arms.

Legs 123 are pivoted to the chassis 101, and are arranged to be raised and lowered by means of hydraulic cylinders 124. The legs 123 have at their outer ends feet 125 which, when the legs are lowered as shown in Fig. 7, may rest on the seabed to position and stabilise the machine.

The operation of the second form of bending machine is similar to that of the first form of bending machine described above except that, once the machine has been positioned at the correct point along the length of the pipeline 4 with the arms 109 closed, the legs 123 may be lowered so as to stabilise the machine before bending commences. The feet 125 may be formed as skids, or equipped with rollers, so that they can remain in contact with the seabed, and can stabilise the machine, while it is moving forwards between successive bends.

Although, as shown in Fig. 7, the bending machine is upright and the bend imparted to the pipeline 4 will be a downward bend in a vertical plane, it will be seen that, by extending the hydraulic cylinders 124 unevenly, the bending machine can be positioned at an angle, so that the bend imparted deflects the pipeline 4 sideways as well as downwards. By a suitable modification of the attachment between the bending machine proper and the rest of the ROV, it may be possible to impart a purely horizontal or even upward bend to the pipeline. However, for most purposes the additional versatility of such an arrangement is not thought to justify the additional complication.

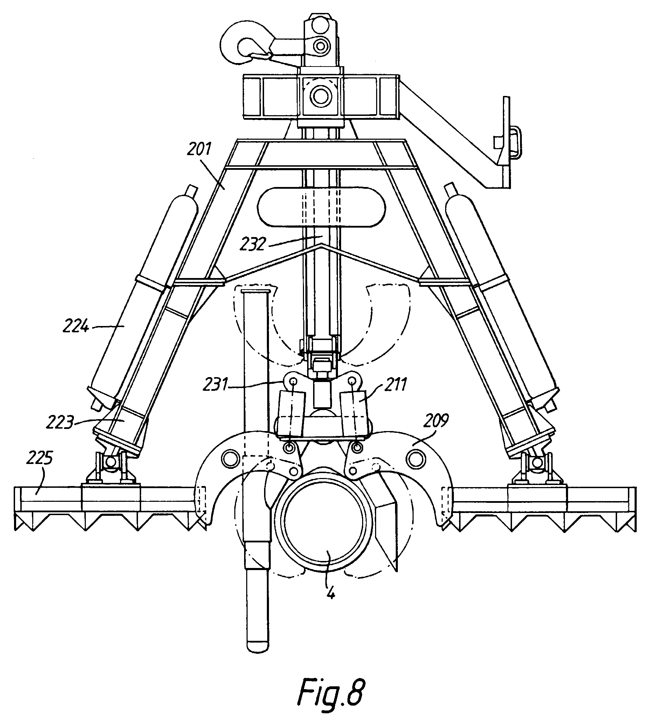

Fig. 8 shows a pipe gripping and lifting device that may be used in conjunction with, or as part of, a bending machine according to the invention. The pipe gripping device has legs 223 that are not pivoted to the chassis 201, but are telescopic, and are extended and retracted by hydraulic cylinders 224. At the centre of the device are gripping jaws 209, which are opened and closed by hydraulic cylinders 211. The jaws 209 do not meet when they are closed. The jaws are mounted on a carrier 231, which is raised and lowered by a hydraulic cylinder 232.

In use, the pipe gripping device is positioned over a pipeline 4, with the feet 225 firmly planted on the seabed, the carrier 231 is lowered, and the jaws 209 are closed round the pipe. Then, by means of the hydraulic cylinder 232, the jaws 209, and with them the pipeline 4, are raised. The highest position of the jaws 209 is shown in chain-dotted lines in Fig. 8. With the pipe 4 raised off the seabed, the bending restraint 12 or 112 of the bending machine can more easily be inserted under the pipeline.

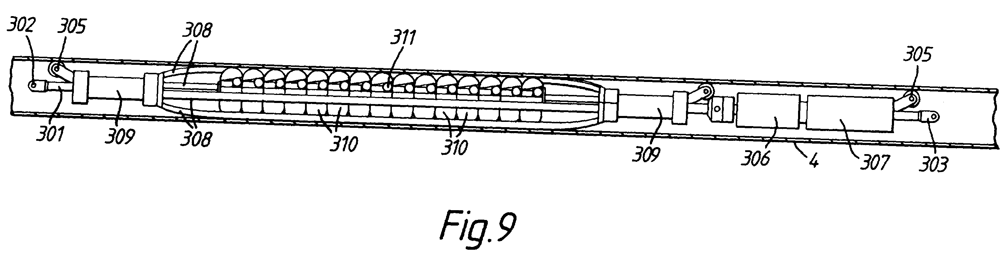

Referring now to Fig. 9, one form of mandrel for use with a bending machine according to the invention comprises a central core 301, which is provided at its ends with attachment points 302 and 303 for a tether rope (not shown) connecting the mandrel to the pipe-laying vessel through the open end of the pipeline 4 being laid, and for a tether rope connected to an anti-buckle stiffener or other devices further along the pipeline. It is known for such a tether rope to act as an umbilical line for apparatus within the pipeline. The umbilical line may comprise a 3/4" (19 mm) diameter steel rope, electrical power supply cables, and signal cables. Instead of the electrical supply cables in the umbilical line, the mandrel may incorporate electric storage batteries (not shown). The mandrel is also provided with wheels 305 for running along the interior of the pipeline 4, and with a converter 306 for converting electrical power, supplied by the umbilical line, into hydraulic power. A beacon 307 which may comprise, for example, a gamma-ray source, a sonic emitter, or a magnet, is provided for location of the mandrel from outside the pipe. A suitable beacon may be any beacon the emissions from which will penetrate the wall of the pipeline 4 without damaging it, will not propagate along the pipeline substantially, and can readily be detected by a sensor on an attendant ROV. Preferably, the beacon is activated only when it is needed. For example, if a gamma-ray source is used, it is preferably retracted into a shielded container when not in active use.

The mandrel comprises a plurality of bowed, resiliently flexible staves 308, which are attached at one or both ends to a hydraulic cylinder 309, powered by the converter 306. The other end of the or each cylinder 309, and the other ends of the staves 308 if they are not provided with another cylinder 309, are fixed to the core 301 of the mandrel. In a relaxed state, the staves 308 are bowed to an outside diameter slightly less than the internal diameter of the pipe 4. By actuation of the cylinder or cylinders 309, the ends of the staves 308 are forced closer together, causing the staves to bow out further.

The mandrel also comprises a plurality of segments 310, each in the form of a split ring provided with a hydraulic wedge device 311 to expand the ring. Other forms of segment may be provided instead. For example, each segment may be a ring with a gap in it, with a spider mounted on the middle part of the ring and extending into the centre of the ring. The ends of the ring may then be spread apart by jacks supported by the spider. In their relaxed state, the ring segments 310 are slightly smaller than the internal diameter of the pipeline 4. The segments 310 are slightly spaced apart lengthways, in order to allow the flexibility necessary for the mandrel to adapt itself to bends in the pipe, both during bending and when being moved along the pipeline. Subject to that, the segments are preferably as close together as possible, in order to provide the maximum support for the pipeline.

The portion of the mandrel provided with the ring segments 310 is preferably sufficiently long that the entire series of bends needed to form a curve in the pipe 4 can be carried out within the length of that portion. It is then not necessary to release and move the mandrel while forming a curve, which can lead to a significant saving in effort.

In use, the mandrel is lowered into the pipeline 4 from the open end of the pipeline as it is being assembled on the pipe-laying vessel. Since the mandrel is not provided with means for propelling it along the pipeline in a direction away from the vessel, it is preferably introduced before it is expected to be needed, allowed to assume a position in the pipe beyond the point at which the pipe comes to rest on the seabed, and then positioned by shortening the tether rope. The approximate position of the mandrel is known from the length of the tether rope, and the exact position can be determined by activating the beacon 307 and detecting the emissions from the beacon with a suitable sensor on an ROV outside the pipeline 4.

When the mandrel is correctly positioned, the cylinders 309 are activated to expand the staves 308, and the wedges 311 are activated to expand the rings 310, so that the staves and rings press against the wall of the pipe. Those actions both lock the mandrel into position in the pipeline 4, and provide support for the wall of the pipe, reducing the risk of buckling of the pipe while it is being bent.

After use, the mandrel in its relaxed, contracted state may be either recovered through the open end of the pipe on board the pipe-laying vessel or left in the pipeline, trailing along on the tether rope as the pipeline is laid, until it is next needed.

## Claims

1. A pipe-bending machine suitable for use on continuous pipelines, especially underwater, comprising: first and second means for engaging one side of a pipeline at locations separated along the length of the pipeline; third means for engaging the other side of such a pipeline between the first and second means; and means for urging at least one of the first, second, and third means towards the pipeline so that the first, second, and third means co-operate to apply a bending stress to the pipeline; characterised in that the pipe-bending machine comprises a portion that is arranged to be closed round a pipeline and opened to permit the machine to be positioned round and removed from a pipeline.

2. A machine according to claim 1, wherein the first, second, and third means have a concave transverse profile matched to the curvature of a pipeline that the machine is intended to bend, and the third means has a convex, preferably parabolic, longitudinal profile.

3. A machine according to claim 1 or claim 2, wherein the third means is constructed in two halves, each mounted on a pivotable arm, and means are provided to lock the arms together when they are closed round a pipe.

4. A machine according to claim 3, wherein the locking means comprises one or more bolts, preferably hydraulically actuated, arranged to pass through aligned bores in overlapping tip portions of the arms.

5. A machine according to any one of claims 1 to 4, comprising wedge means arranged to urge the first means towards a pipeline with which the machine is engaged in order to bend the pipeline.

6. A machine according to any one of claims 1 to 5, comprising wheels, rollers, or the like, by means of which the machine can run along a pipe.

7. A machine according to any one of claims 1 to 6, comprising legs arranged to engage a seabed or other ground surface on or close to which the pipeline is lying.

8. A machine according to claim 7, wherein the legs have rollers, skids, or the like at their feet, arranged to permit the machine to move along the pipeline with the legs remaining in engagement with the ground surface.

9. A mandrel suitable for use within a pipeline under construction, comprising an axial core, a plurality of bowed staves extending along the core, means for decreasing and increasing the axial length between the ends of the staves, thereby causing them to bow out to a greater and lesser extent and to grip and release the pipeline, and a plurality of annular segments disposed around the core within the staves and provided with means for causing them to expand and clamping them firmly against the inside of the pipeline.

10. A mandrel according to claim 9, wherein at least one end of the staves is connected to the core by means, preferably one or more hydraulic cylinders, for urging the end of the staves lengthways of the core.

11. A mandrel according to claim 9 or claim 10, wherein the means for causing the annular segments to expand comprises wedges.

12. A mandrel according to any one of claims 9 to 11, comprising a beacon emitting gamma rays, sound waves, a magnetic field, or other emanation that can be detected and located through the wall of a pipeline.
